# EUROPEAN PATENT APPLICATION

(11) **EP 4 838 757 A1**
(43) Date of publication of application: **11.11.2026**
(21) Application number: 25174394.4
(22) Date of filing: 06.05.2025
(51) Int. Cl.: H02K 1/16, H02K 3/34

(54) **ELECTRIC MACHINE FOR A VEHICLE AND METHOD FOR MANUFACTURING**

(71) Applicant: Ford Global Technologies, LLC, Dearborn, MI 48126 (US)
(72) Inventor: Llin Terol, Daniel, 46870 Onteniente (ES); Denham, Matthew, Copthorne, West Sussex, RH10 2BF (GB)
(74) Representative: Markowitz, Markus

(57) **Abstract**

An electric machine (10) for a vehicle and a method for manufacturing are provided. The electric machine (10) comprises a stator (14) with a laminated core (15) having multiple laminated metal sheets (16) mounted adjacent to each other along a longitudinal axis (18) of the laminated core (15). The laminated metal sheets (16) cooperatively establish at least one receiving volume (22) in which at least one stator winding (30) is arranged. At least one slot liner (34) is arranged between the at least one stator winding (30) and the laminated metal sheets (16). The stator (14) comprises at least one channel (28) which extends along the longitudinal axis (18) of the laminated core (15) between the laminated metal sheets (16) and the at least one stator winding (30) once the stator (14) is assembled.

## Description

The disclosure generally relates to an electric machine for a vehicle and a method for manufacturing.

Stators of electric machines must be mechanically robust, as they operate under harsh conditions. Electrical current must flow through the windings in a highly specific manner, and any short circuits or minor electrical leaks render the machine unusable. Vibrations can cause these short circuits or leaks because the various insulators can wear down over time, potentially leading to contact between the winding copper and the core itself. To mitigate this, a slot liner is arranged between the stator winding and the magnetic core. However, even though this slot liner is provided, a relative movement of individual components may still arise, such as wires of the stator winding, which would destroy the electrical insulation provided by the slot liner over time. Therefore, varnish is applied to fill all gaps, ensuring that the stator becomes a solid unit where nothing can move. This prevents friction and wear, thereby maintaining the machines lifespan.

However, completely filling all cavities of the stator winding and in between the stator winding and the magnetic core, is almost impossible due to numerous influencing factors. Additionally, it is especially challenging to verify the varnish filling inside a manufacturing environment, as the fill level can only be determined through destructive testing. The most difficult area to fill is the cavity between the slot liner and the core. This cavity can be blocked by various factors, causing the varnish to flow into unwanted areas, leading to contamination and rendering the part waste. A blockage may occur if laminations of the core comprise protrusions that protrude a few tenths of a millimeter. This may cause a damming effect between the slot liner and the laminated core. Another reason for a blockage relates to the glue used to couple adjacent laminated metal sheets which form the core as this glue may also protrude, causing a similar damming effect. In addition, the copper wires of the stator winding need to be straightened and bent, but due to the spring-back effect, the desired bending may not be perfectly achievable leading to a variation within the manufacturing procedure. Also, the slot liner is bent and cut causing a further process variability which potentially causes a non-optimized varnish filling. Moreover, the slot sizes may vary a few tenths of a millimeter. Also, the copper thickness of the stator winding has its own manufacturing tolerances. All these causes may lead to an imperfect varnish filling of the gaps which cannot be reliably evaluated on-site without destructive testing.

If the gaps cannot be adequately filled with the varnish, normally, given that the quantity applied is always the same, the varnish flows somewhere else. Often, this leads to contamination issues, such as having the varnish on the top or bottom surfaces. In this case, the produced stator is either waste or laborious and extensive postprocessing is required (if at all possible).

JP 7498098 B2 discloses a mica tape suppressing the formation of a gap formed between an iron core slot and a mica insulation layer on the surface of a conductor. The mica tape is obtained by bonding a base material and mica paper to each other by means of an adhesive. A semi-cured varnish is held on the outermost surface of the mica tape.

CN 106208572 A discloses an insulation treatment method for a motor stator. A first conformal felt is arranged between a slot insulator and a winding. Also, a second conformal felt is arranged between a layer insulator and a winding. The first conformal felt and the second conformal felt have a paint absorption performance and a conformal capacity. Therefore, varnish flows inside the respective slot and is being prevented from being lost within the baking process.

WO 24050301 A1 discloses an electric motor comprising a stator having a stack of laminations. Windings of the stator comprise wires that have individual insulation. The wires form slot windings positioned in slots of the stator. Varnish is applied to the slots of the stator. The varnish contacts the laminations and the slot windings.

Therefore, the prior art documents generally disclose that varnish may be applied to fill the slots. However, the prior art approaches do not disclose any measures by which the filling factor regarding the varnish can be optimized. For example, there are no approaches disclosed as to how a blockage of a slot for distributing the varnish may be prevented.

Accordingly, there is a need for a measure to increase the filling of the slots with the varnish, thereby enhancing the electrically insulating properties between the laminated core and the stator winding, and to reduce the rate of waste products by preventing that the varnish flows toward unwanted regions of the stator.

The subject matter of the independent claims satisfies the respective need. Further embodiments are indicated within the dependent claims and the following description, each of which, individually or in combination, may represent aspects of the disclosure.

According to an aspect, embodiments of the present invention relate to an electric machine for a vehicle. The electric machine comprises a stator with a laminated core having multiple laminated metal sheets mounted adjacent to each other along a longitudinal axis of the laminated core. The laminated metal sheets cooperatively establish at least one receiving volume in which at least one stator winding is arranged. At least one slot liner is arranged between the at least one stator winding and the laminated metal sheets. The stator comprises at least one channel which extends along the longitudinal axis of the laminated core between the laminated metal sheets and the at least one stator winding once the stator is assembled.

The disclosure makes use of the idea that an additional channel can be provided for optimizing the distribution of the varnish. As a result, the varnish can be distributed along the entire length along the longitudinal axis of the laminated core and, from the channel, distribute laterally toward remaining gap portions between the laminated core and the stator winding. Since the channel provides an additional, spatially limited cross-section for distributing the varnish, the electric machine is less sensitive to manufacturing tolerances of the components of the stator, such as the laminated metal sheets, the slot liner, and the stator winding. In addition, since an optimized distribution of the varnish can be achieved with regard to the gaps which shall be filled with the varnish, no portions of the varnish flow toward unwanted locations within the stator. Consequently, the rate of waste products of the manufactured stator is reduced as compared to prior art approaches. Put differently, the manufactured products exhibit tailored properties as to an enhanced electric insulation between the laminated core and the stator winding. Also, the manufacturing efficiency is increased such that, on average, the electric machine can be manufactured at lower manufacturing efforts.

In some embodiments, each laminated metal sheet may comprise a shape such that an inner surface facing the at least one stator winding comprises an indentation. The indentations of all laminated metal sheets may cooperatively form the at least one channel. In other words, the at least one channel is established by the shape of the laminated metal sheets themselves. As a consequence, the at least one channel is robustly established such that other manufacturing tolerances of other components, such as during the relative arrangement of the laminated metal sheets, may be neglected. Thus, the desired optimized distribution of the varnish can be reliably guaranteed.

For achieving appropriately shaped laminated metal sheets, a die cutting procedure used to manufacture the laminated metal sheets from material blanks may be adapted. Therefore, right from the stamping procedure, the laminated metal sheets comprise an altered shape as compared to previous approaches including the respective indentations. Consequently, the forming of the indentations is incorporated into the stamping procedure which is required anyway. Hence, the manufacturing efficiency remains high. Also, the produced indentations of the various laminated metal sheets may be multifunctional. In particular, they may be used for aligning the respective laminated metal sheets when forming the laminated core of the stator.

Preferably, according to a cross-section through the laminated metal sheet, the indentations may comprise a predetermined shape, such as a semi-circular shape, a semi-elliptical shape, a triangular shape, a rectangular shape, or combinations thereof. Accordingly, indentations may be established having various different shapes tailored for the specific use case.

Optionally, for a dip section of the inner surface corresponding to the indentation, a distance between the respective laminated metal sheet and the at least one stator winding is larger than for neighboring sections of the inner surface adjacent the dip section. Hence, an additional volume for a flow of the varnish is established by the indentation.

According to an aspect, each laminated metal sheet may of course also comprise multiple indentations generally extending parallel to each other and along the longitudinal axis of the laminated core. In principle, the collection of indentations which a laminated metal sheet comprises depends on the desired flow paths of the varnish. Hence, the configuration of the indentations may be tailored in view of the specific application scenario.

In some embodiments, the at least one slot liner may comprise at least one notch extending along the longitudinal axis of the laminated core such that the at least one channel is formed. The at least one notch may for example be established by a bending procedure which the slot liner may undergo. In this case, the die cutting procedure may remain same as before which is advantageous, since modifications to the die cutting procedure are complex and cause at least singular manufacturing expenses. Instead, a more efficient approach for establishing the at least one channel relates to the slot liner which can be treated very efficiently such that the at least one notch is established. In this case, the modifications required for establishing the at least one notch within the slot liner may require only less manufacturing expenses as compared to the effort which is required for altering the die cutting procedure.

In particular, a notch of the slot liner may be established if the slot liner is bent multiple times such that a predetermined shape of the slot liner is achieved. For example, a single notch may be realized by three curvatures which of course may be established within a single bending procedure.

Similar to the shape of the indentations, the shape of the notch may be manifold. According to a cross-section through the slot liner, the notch may comprise a predetermined shape, such as a semi-circular shape, a semi-elliptical shape, a triangular shape, a rectangular shape, or combinations thereof. Hence, the variability is large.

According to an aspect, the slot liner may comprise multiple notches extending along the longitudinal axis of the laminated core such that multiple channels are formed. Therefore, the distribution of the varnish can be adapted according to the respective needs in view of the topology of the stator.

Optionally, the slot liner is made of an electrically insulating material. Thus, an effective electrical insulation is provided between the laminated core and the stator winding.

Preferably, the at least one channel is filled with a varnish once the stator is assembled. The varnish may be configured to couple different components of the stator to each other. In other words, the varnish guarantees that relative movements of components forming the stator are prevented once the varnish is cured. Hence, wear of any components forming the stator is prevented.

According to another aspect, embodiments of the present disclosure relate to a method for manufacturing a stator of an electric machine for a vehicle. The method comprises at least the steps of:
- Multiple laminated metal sheets are mounted to each other such that a laminated core of the stator is formed. The multiple laminated metal sheets are arranged next to each other along a longitudinal axis of the laminated core such that they cooperatively establish at least one receiving volume.
- At least one slot liner is arranged inside the at least one receiving volume adjacent the laminated core.
- At least one stator winding is arranged inside the at least one receiving volume such that the at least one slot liner is arranged between the at least one stator winding and the laminated core.

The at least one slot liner and/or the laminated core are formed such that at least one channel is established which extends along the longitudinal axis of the laminated core between the laminated metal sheets and the at least one stator winding.
- A varnish is applied at least to the at least one channel for coupling at least the laminated core, the at least one slot liner, and the at least one stator winding to each other.

Therefore, an efficient manufacturing procedure is provided by which, compared to prior art approaches, an approved coupling between the components forming the stator is achieved. As a consequence, relative movements between the different components forming the stator are prevented such that the robustness of the electrical insulation is high. This leads to an increased lifetime and enhanced performance as compared to prior art stators of known electric machines. As to the at least one channel, the varnish may be distributed to locations inside the setup of the stator were the varnish is desired to be located. Thus, a flow of varnish to unwanted regions of the stator is suppressed or at least reduced. In turn, this leads to a reduced rate of waste products such that a high manufacturing efficiency is achieved.

Optionally, the varnish is cured once a desired amount of the varnish is applied to the gaps within the stator, in particular, to the at least one channel. For curing the varnish at least one heating device may be applied. In an alternative, the varnish may also cure itself without external heating.

Preferably, the at least one channel is established by indentations of an inner surface of the laminated metal sheets facing the at least one stator winding, and/or by at least one notch established within the at least one slot liner. Therefore, one or multiple channels can be efficiently established in view of different components forming the stator. Hence, the variability of the method is large.

In some embodiments, the at least one notch may be established by guiding the at least one slot liner through a gap between shaped cylinders of an embossing device. A first of the shaped cylinders may comprise at least one circumferentially extending protruding rib. A second of the shaped cylinders may comprise at least one circumferentially extending embossing groove. The first shaped cylinder and the second shaped cylinder may be arranged such that the at least one protruding rib and the at least one embossing groove together establish the at least one notch of the slot liner once the slot liner is guided through the gap between the shaped cylinders of the embossing device. This way, the at least one notch of the slot liner can be efficiently established by considering shaped cylinders having corresponding protruding ribs and embossing grooves. Also, this production technique for generating the tailored slot liner may be efficiently modified in case the established notches are inappropriate for a specific design of the stator. In this case, only the shaped cylinders have to be exchanged for different shaped cylinders having adapted shapes of the protruding ribs and the embossing grooves. Consequently, the manufacturing efficiency is high also in view of establishing the notches of the slot liner.

According to an aspect, the multiple laminated metal sheets may be mounted to each other by applying a glue arranged in between each pair of adjacent laminated metal sheets. This means, that the varnish is not necessarily used to also coupled the laminated metal sheets to each other. Instead, the multiple laminated metal sheets may be initially mounted to each other by applying glue in between opposing surfaces of neighboring laminated metal sheets. Only subsequently, the remainder of the stator may be manufactured by also applying the varnish. Since these manufacturing steps are separated from each other, the alignment of the laminated metal sheets for forming the laminated core may be achievable at higher precision and smaller tolerances. Also, the glue may comprise specific material properties adapted for coupling adjacent laminated metal sheets to each other while the varnish may comprise different material properties. For example, the material properties of the varnish may be optimized such that the varnish may even flow toward small gaps established between different components forming the stator.

Optionally, each laminated metal sheet is made of a soft magnetic material. For example, the laminated metal sheets may be formed of electric steel (also called electric sheet).

Preferably, each laminated metal sheet may comprise an electrically insulating coating applied to an external surface thereof, in particular, to surface portions facing the stator winding or facing adjacent laminated metal sheets. Hence, the electric insulating properties can be increased.

In some embodiments, the stator winding may comprise a wire made of an electrically conducting material, such as copper, which comprises an electrically insulating coating. Thereby, the electric insulating properties can be further enhanced.

The electric machine may be configured to be used inside at least one of ground-based vehicles, such as cars and trucks, aviation related vehicles, rail transport vehicles, shipping, aerospace or consumer goods. Thus, the number of potential applications is high.

The foregoing aspects and further advantages of the claimed subject matter will become more readily appreciated as the same become better understood by reference to the following detailed description when taken in conjunction with the accompanying drawings. In the drawings,
- Fig. 1 is a schematical drawing of an electric machine for a vehicle according to an embodiment,
- Fig. 2 is a cross-sectional view of a laminated metal sheet of the stator of the electric machine as indicated in Fig. 1,
- Fig. 3 is a cross-sectional view of a stator winding and a slot liner of the stator of the electric machine as indicated in Fig. 1,
- Fig. 4 is a cross-sectional view of the electric machine as indicated in Fig. 1,
- Fig. 5 is a schematic view of an embossing device for producing the slot liner, and
- Fig. 6 is a flow chart of a method for manufacturing a stator of an electric machine for a vehicle according to an embodiment.

All of the features disclosed hereinafter with respect to the example embodiments and/or the accompanying figures can alone or in any sub-combination be combined with features of the aspects of the present disclosure including features of preferred embodiments thereof, provided the resulting feature combination is reasonable to a person skilled in the art.

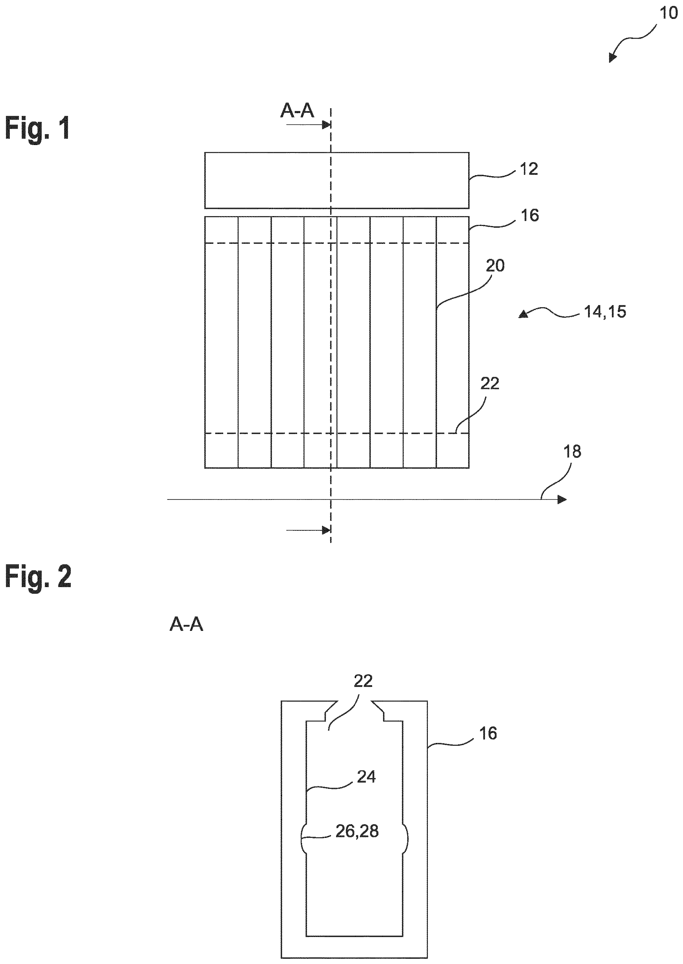

Fig. 1 is a schematical drawing of an electric machine 10 for a vehicle according to an embodiment.

The electric machine comprises a rotor 12 and a stator 14. The stator 14 comprises a laminated core 15 which comprises multiple laminated metal sheets 16 which are stacked along a longitudinal axis 18 of the laminated core 15.

Each of the laminated metal sheet 16 comprises an electrically insulating coating applied to outer surfaces thereof. Adjacent laminated metal sheet 16 are coupled to each other by a glue 20 which is applied to the surfaces of the laminated metal sheets 16 being oriented orthogonal to the longitudinal axis 18.

The laminated metal sheets 16 are coupled to each other such that they cooperatively establish a receiving volume 22 for a stator winding of the stator 14.

Fig. 2 is a cross-sectional view of a laminated metal sheet 16 of the stator 14 of the electric machine 10 as indicated in Fig. 1.

Each laminated metal sheet 16 comprises an inner surface 24 facing the receiving volume 22. Generally, the laminated metal sheets 16 are produced from a die cutting procedure. The shape of each laminated metal sheet 16 is adapted such that the inner surface 24 comprises at least one indentation 26 which establishes a channel 28 extending along the longitudinal axis 18 of the laminated core 15.

According to this embodiment, the indentation 26 comprises a semi-elliptical shape. However different shapes of indentations 26 may also be realized. In addition, each laminated metal sheet 16 may comprise multiple indentations 26 for realizing multiple channels 28.

The position of the indentations 26 of separate laminated metal sheets 16 generally corresponds to each other such that the channel 28 is established at a same cross-sectional position along the longitudinal axis 18.

In an alternative, the indentations 26 of separate laminated metal sheets 16 may also vary in view of the cross-sectional position along the longitudinal axis 18 for establishing desired topologies of the channels 28.

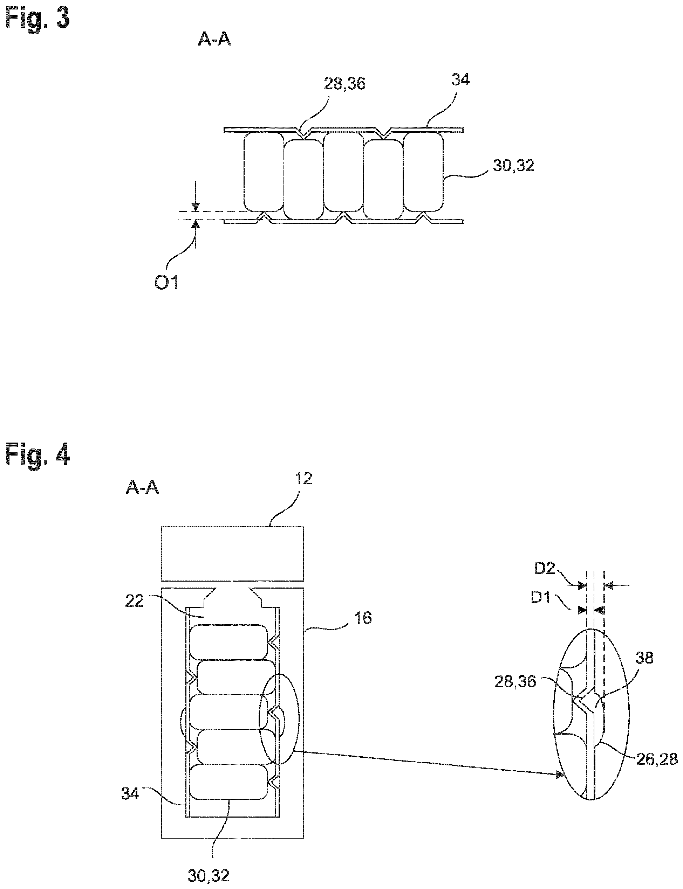

Fig. 3 is a cross-sectional view of a stator winding 30 and a slot liner 34 of the stator 14 of the electric machine 10 as indicated in Fig. 1.

According to this embodiment, the stator winding 30 is established by multiple copper wires 32. Each copper wire 32 is coated with an electrically insulating material. However, additional electrical insulation is required in view of the laminated core 15 of the stator 14. To this end, the slot liner 34 is used and encompasses the stator winding 30.

Notably, the slot liner 34 comprises at least one notch 36 established by multiple bends of the material of the slot liner 34. In this case, the notches 36 comprise a triangular shape. However, in alternative embodiments, the shape of the notches 36 may also be different. The notches 36 establish channels 28 which are extending along the longitudinal axis 18 of the laminated core 15.

Generally, the stator winding 30 comprises a defined arrangement of the individual wires 32. Here, adjacent individual wires 32 are displaced by an offset O1 with regard to each other. According to this embodiment, the notches 36 are formed such that they span the offset O1 and contact a displaced wire 32 although the slot liner 34 without the notches would otherwise be distant from the respective wire at the respective position.

Fig. 4 is a cross-sectional view of the electric machine 10 as indicated in Fig. 1.

The stator winding 30 including the wires 32 as well as the slot liner 34 are arranged within the receiving volume 22 of the laminated metal sheet 16.

The indentations 26 of the laminated metal sheet 16 and the notches 36 of the slot liner 34 extend along parallel directions, parallel to the longitudinal axis 18 of the laminated core 15 such that parallel channels 28 are established.

The magnified view illustrates that the indentations 26 are formed within the inner surface 24 of the laminated metal sheet 16 such that, for a dip section of the inner surface 24 corresponding to the indentation 26, a distance D2 between the respective laminated metal sheet 16 and the at least one stator winding 30 is larger than a distance D1 for neighboring sections of the inner surface 24 adjacent the dip section. Here, in view of the stator winding 30, the effective position is taken into account, which generally may be occupied by the stator winding 30. In other words, a potential displacement of a wire 32 of the stator winding 30 as well as an effective length of a notch 36 is ignored for illustrating the different distances. Therefore, the indentations 26 cause the inner surface 24 inside the indentation 26 to stand back from the stator winding 30.

By means of the indentations 26 and the notches 36 channels 28 are established extending along the longitudinal axis 18 of the laminated core 15. During the manufacturing procedure of the stator 14, varnish 38 is applied to all gaps between different components forming the stator 14, such as the laminated metal sheet 16, the stator winding 30, and the slot liner 34.

The indentations 26 and the notches 36 establish the channels 28 such that the varnish 38 can particularly flow along the longitudinal axis 18 into the gaps formed between the laminated metal sheet 16 and the slot liner 34. As a result, the distribution of the varnish 38 is optimized such that movements of individual components forming the stator 14 can be efficiently prevented. Thereby, a very robust topology of the stator 14 is established such that the electrically insulating properties between the laminated core 15 and the stator winding 30 is increased. This leads to an elongated lifetime and tailored operating properties of the electric machine 10.

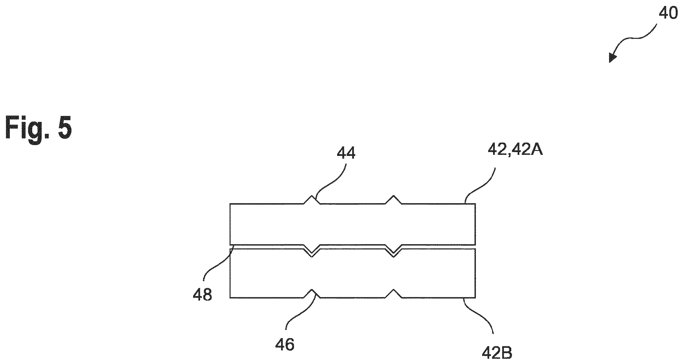

Fig. 5 is a schematic view of an embossing device 40 for producing the slot liner 34.

The embossing device 40 comprises a first shaped cylinder 42A and a second shaped cylinder 42B. The first shaped cylinder 42A comprises at least one circumferentially extending protruding rib 44. The second shaped cylinder 42B comprises at least one circumferentially extending embossing groove 46.

The shaped cylinders 42 are arranged such that the protruding rib 44 and the embossing groove 46 correspondingly interact with each other for forming a notch 36 once a raw sheet of the slot liner 34 is guided through the gap 48 between the shaped cylinders 42.

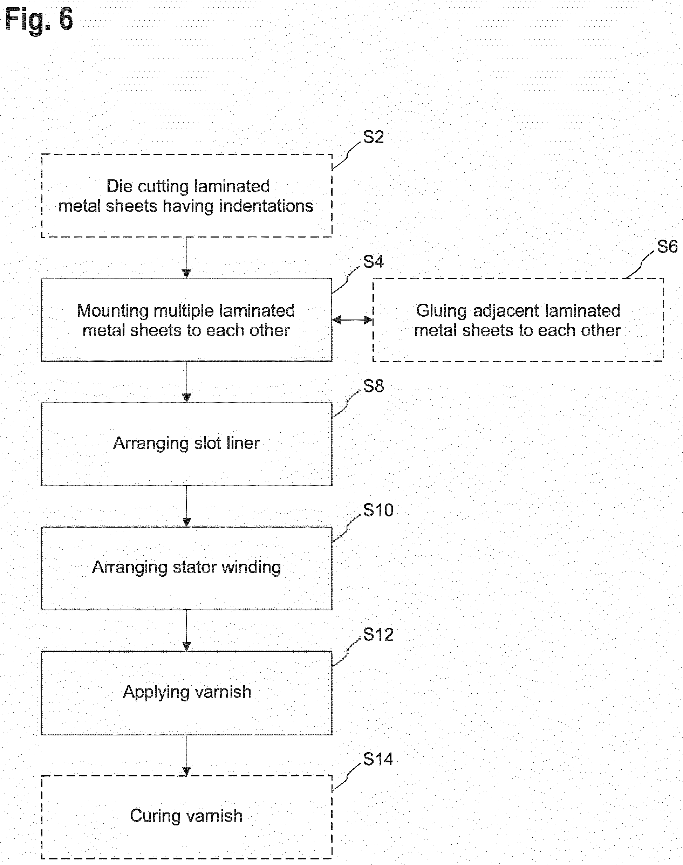

Fig. 6 is a flow chart of a method for manufacturing a stator 14 of an electric machine 10 for a vehicle according to an embodiment.

The method begins with optional step S2, in which the laminated metal sheets 16 are manufactured using a die cutting procedure performed by a die cutting machine. In particular, the laminated metal sheets 16 are cut from material blanks.

In subsequent step S4, multiple laminated metal sheets 16 are mounted to each other such that a laminated core 15 of the stator 14 is formed. In this regard, the multiple laminated metal sheets 16 are arranged next to each other along the longitudinal axis 18 of the laminated core 15. Accordingly, the multiple laminated metal sheets 16 cooperatively establish at least one receiving volume 22. During the mounting procedure, the multiple laminated metal sheets 16 are precisely aligned with regard to each other such that a desired shape of the laminated core 15 is achieved.

Step S4 can be modified by optional step S6 in which adjacent laminated metal sheets 16 are mounted to each other by applying glue 20 to opposing surfaces which are oriented orthogonal to the longitudinal axis 18.

Subsequent to step S4, at least one slot liner 34 is arranged inside the at least one receiving volume 22 adjacent the laminated core 15 in step S8.

In subsequent step S10, at least one stator winding 30 is arranged inside the at least one receiving volume 22 such that the at least one slot liner 34 is arranged between the at least one stator winding 30 and the laminated core 15.

Either the laminated metal sheets 16 comprise indentations 26 or the slot liner 34 comprises at least one notch 36 such that at least one channel 28 for the varnish 38 is established extending along the longitudinal axis 18 of the laminated core 15 between the laminated metal sheets 16 and the stator winding 30.

Within the following step S12, the varnish 38 is applied at least to the at least one channel 28 for coupling at least the laminated core 15, the at least one slot liner 34, and the at least one stator winding 30 to each other.

Afterwards, the varnish 38 is cured in optional step S14, e.g. using an external heating device. As a result, the package of the stator 14 is prepared such that no single component thereof may move relative to other components thereof.

## Claims

1. An electric machine (10) for a vehicle, the electric machine (10) comprising a stator (14) with a laminated core (15) having multiple laminated metal sheets (16) mounted adjacent to each other along a longitudinal axis (18) of the laminated core (15), wherein the laminated metal sheets (16) cooperatively establish at least one receiving volume (22) in which at least one stator winding (30) is arranged, wherein at least one slot liner (34) is arranged between the at least one stator winding (30) and the laminated metal sheets (16), and wherein the stator (14) comprises at least one channel (28) which extends along the longitudinal axis (18) of the laminated core (15) between the laminated metal sheets (16) and the at least one stator winding (30) once the stator (14) is assembled.

2. The electric machine (10) of claim 1, wherein each laminated metal sheet (16) comprises a shape such that an inner surface (24) facing the at least one stator winding (30) comprises an indentation (26), and wherein the indentations (26) of all laminated metal sheets (16) cooperatively form the at least one channel (28).

3. The electric machine (10) of claim 2, wherein for a dip section of the inner surface (24) corresponding to the indentation (26), a distance between the respective laminated metal sheet (16) and the at least one stator winding (30) is larger than for neighboring sections of the inner surface (24) adjacent the dip section.

4. The electric machine (10) of any one of the preceding claims, wherein the at least one slot liner (34) comprises at least one notch (36) extending along the longitudinal axis (18) of the laminated core (15) such that the at least one channel (28) is formed.

5. The electric machine (10) of claim 4, wherein the slot liner (34) comprises multiple notches (36) extending along the longitudinal axis (18) of the laminated core (15) such that multiple channels (28) are formed.

6. The electric machine (10) of any one of the preceding claims, wherein the slot liner (34) is made of an electrically insulating material.

7. The electric machine (10) of any one of the preceding claims, wherein the at least one channel (28) is filled with a varnish (38) once the stator (14) is assembled, wherein the varnish (38) is configured to couple different components of the stator (14) to each other.

8. A method for manufacturing a stator (14) of an electric machine (10) for a vehicle, the method comprising at least the steps of:
- Mounting multiple laminated metal sheets (16) to each other such that a laminated core (15) of the stator (14) is formed, wherein the multiple laminated metal sheets (16) are arranged next to each other along a longitudinal axis (18) of the laminated core (15) such that they cooperatively establish at least one receiving volume (22),
- Arranging at least one slot liner (34) inside the at least one receiving volume (22) adjacent the laminated core (15),
- Arranging at least one stator winding (30) inside the at least one receiving volume (22) such that the at least one slot liner (34) is arranged between the at least one stator winding (30) and the laminated core (15),
wherein the at least one slot liner (34) and/or the laminated core (15) are formed such that at least one channel (28) is established which extends along the longitudinal axis (18) of the laminated core (15) between the laminated metal sheets (16) and the at least one stator winding (30), and
- Applying a varnish (38) at least to the at least one channel (28) for coupling at least the laminated core (15), the at least one slot liner (34), and the at least one stator winding (30) to each other.

9. The method of claim 8, wherein the at least one channel (28) is established by indentations (26) of an inner surface (24) of the laminated metal sheets (16) facing the at least one stator winding (30), and/or by at least one notch (36) established within the at least one slot liner (34).

10. The method of claim 8 or 9, wherein the at least one notch (36) is established by guiding the at least one slot liner (34) through a gap (48) between shaped cylinders (42) of an embossing device (40), wherein a first of the shaped cylinders (42A) comprises at least one circumferentially extending protruding rib (44), and wherein a second of the shaped cylinders (42B) comprises at least one circumferentially extending embossing groove (46), and wherein the first shaped cylinder (42A) and the second shaped cylinder (42B) are arranged such that the at least one protruding rib (44) and the at least one embossing groove (46) together establish the at least one notch (36) of the slot liner (34).

11. The method of any one of claims 8 to 10, wherein the multiple laminated metal sheets (16) are mounted to each other by applying a glue (20) arranged in between each pair of adjacent laminated metal sheets (16).

12. A vehicle comprising an electric machine (10) according to one of the claims 1 to 7.
